Europäisches Patentamt

European Patent Office

Office européen des brevets

(11) Veröffentlichungsnummer : **0 342 760 B1**

(19)

(12) # EUROPÄISCHE PATENTSCHRIFT

(45) Veröffentlichungstag der Patentschrift :
**22.02.95 Patentblatt 95/08**

(21) Anmeldenummer : **89201244.4**

(22) Anmeldetag : **17.05.89**

(51) Int. Cl.⁶ : $H04N\ 5/32$, $H04N\ 5/217$

(54) Verfahren zur Erzeugung einer Röntgenaufnahme mittels eines Photoleiters und Anordnung zur Durchführung des Verfahrens.

(30) Priorität : **19.05.88 DE 3817027**

(43) Veröffentlichungstag der Anmeldung :
**23.11.89 Patentblatt 89/47**

(45) Bekanntmachung des Hinweises auf die Patenterteilung :
**22.02.95 Patentblatt 95/08**

(84) Benannte Vertragsstaaten :
**DE FR GB NL**

(56) Entgegenhaltungen :
**EP-A- 0 212 733**
**DE-A- 3 704 272**
**GB-A- 2 149 260**

(73) Patentinhaber : **Philips Patentverwaltung GmbH**
**Wendenstrasse 35c**
**D-20097 Hamburg (DE)**
㊽ **DE**
Patentinhaber : **Philips Electronics N.V.**
**Groenewoudseweg 1**
**NL-5621 BA Eindhoven (NL)**
㊽ **FR GB NL**

(72) Erfinder : **Rupp, Stephan**
**Bertholdstrasse 16**
**D-5190 Stolberg (DE)**
Erfinder : **Schiebel, Ulrich, Dr.**
**Zehntweg 60**
**D-5100 Aachen (DE)**

(74) Vertreter : **Hartmann, Heinrich, Dipl.-Ing. et al**
**Philips Patentverwaltung GmbH,**
**Wendenstrasse 35c**
**D-20097 Hamburg (DE)**

EP 0 342 760 B1

**Beschreibung**

Die Erfindung betrifft ein Verfahren nach dem Oberbegriff des Anspruchs 1 sowie eine Anordnung zur Durchführung eines solchen Verfahrens.

Ein solches Verfahren und eine solche Anordnung sind aus der EP-A 212 733 sowie aus den darin zitierten Literaturstellen bekannt. Das zweidimensionale, auf der Oberfläche des Photoleiters erzeugte Ladungsmuster, das im wesentlichen der räumlichen Verteilung der Röntgenstrahlungsintensität entspricht, wird von einer Elektrometeranordnung abgetastet und in ein elektrisches Signal umgesetzt. Das elektrische Signal wird verstärkt, gefiltert, digitalisiert und in einem Speicher gespeichert. Es ist dann der digitalen Bildverarbeitung zugänglich.

Der - vorzugsweise aus Selen bestehende Photoleiter - ist normalerweise ein Nichtleiter. Wird er jedoch einer Röntgenstrahlung ausgesetzt, dann nimmt seine Leitfähigkeit während der Bestrahlung an den bestrahlten Stellen zu, so daß an diesen Stellen die durch eine vorherige Aufladung erzeugte Aufladung verringert wird, und zwar umso mehr, je größer die Intensität der Röntgenstrahlung ist und je länger sie auf den Photoleiter einwirkt, d.h. je größer die Dosis an der betreffenden Stelle ist. Ein wesentliches Problem bei einem solchen Röntgenaufnahmesystem besteht in den Defektstellen in der Photoleiterschicht. An diesen Defektstellen stellen sich - hervorgerufen beispielsweise durch kleine leitfähige Bereiche im Photoleitermaterial - lokale Ladungsdefizite ein. Dies hat zur Folge, daß die aus den Bildwerten erzeugte Röntgenaufnahme eine entsprechende Anzahl von punktförmigen Artefakten aufweist. Bei einem Photoleiter mit einer Fläche von 400 mm x 400 mm liegt die Zahl solcher Artefakte in der Größenordnung von 100. Solche Artefakte werden vom Betrachter als außerordentlich störend empfunden.

Bei dem eingangs erwähnten Verfahren werden diese Artefakte in der Röntgenaufnahme durch Subtraktion eines Dunkelentladungsbildes korrigiert. Dies setzt einen weiteren Bildspeicher voraus, der die gleiche Kapazität aufweist wie der Bildspeicher für die eigentliche Röntgenaufnahme. Außerdem ergeben sich dabei Schwierigkeiten, weil die Größe der Artefakte von der Intensität der Röntgenstrahlung abhängt, und zwar sowohl von der Intensität bei der jeweiligen Röntgenaufnahme als auch von der Intensität vorangehender Röntgenaufnahmen (Memory-Effekt).

Die Abhängigkeit von der Belichtungsintensität bei der jeweiligen Röntgenaufnahme wird bei dem bekannten Verfahren durch einen von der Dosis abhängigen Korrekturfaktor ausgeglichen, der zuvor durch eine Serie von homogenen Röntgenbelichtungen mit unterschiedlicher Dosis ermittelt werden muß. Der Memory-Effekt, also die Abhängigkeit der Artefaktamplitude von vorangehenden Belichtungen ist umso ausgeprägter, je kürzer der zeitliche Abstand der Röntgenaufnahme zu den vorangegangenen Belichtungen ist. Er kann nur durch regelmäßige Aktualisierung des Dunkelentladungsbildes berücksichtigt werden, was im Extremfall darauf hinauslaufen würde, nach jeder Belichtung ein Dunkelentladungsbild neu aufzunehmen. Darüber hinaus kann dadurch der Memoryeffekt allenfalls an den Stellen kompensiert werden, an denen die Dosis bei der jeweiligen Röntgenaufnahme sehr klein bzw. Null ist. Das bekannte Korrekturverfahren ist daher nicht exakt. Es kommt hinzu, daß der Aufwand für das Korrekturverfahren hoch ist, weil es für jeden Bildpunkt durchgeführt werden muß, unabhängig davon, ob sich an diesem Bildpunkt eine Defektstelle befindet oder nicht, wobei zur Berechnung der Korrektur nur Bildwerte herangezogen werden, die dem betreffenden Bildpunkt zugeordnet sind.

Aufgabe der vorliegenden Erfindung ist es ein Verfahren und eine Anordnung zur Durchführung des Verfahrens anzugeben, wobei der Einfluß der Defektstellen auf das Röntgenbild in einfacherer Weise verringert wird. Ausgehend von einem Verfahren der eingangs genannten Art wird diese Aufgabe durch die im Kennzeichen des Anspruchs 1 angegebenen Maßnahmen gelöst. Eine Anordnung zur Durchführung dieses Verfahrens ist in Anspruch 3 angegeben.

Die Erfindung basiert auf der Erkenntnis, daß die Lage der Defektstellen und der Verlauf des dadurch in dem entsprechenden Bildpunkt und den ihn umgebenden Bildpunkten hervorgerufenen Artefakts nur langfristigen Änderungen unterworfen sind und insbesondere nicht durch die Belichtung des Photoleiters verändert werden. Der Verlauf des durch die gleiche Defektstelle verursachten Artefakts in verschiedenen Röntgenaufnahmen unterscheidet sich nur durch einen Faktor, der von der Amplitude des Artefakts abhängig ist. Wenn also die Lage einer Defektstelle und der Verlauf des dadurch bedingten Artefakts (beispielsweise anhand eines Dunkelentladungsbildes) einmal ermittelt und gespeichert worden sind, muß in den darauffolgenden Aufnahmen für die jeweilige Defektstelle nur der gespeicherte Verlauf mit einem von der Amplitude des Artefakts in der Röntgenaufnahme abhängigen Faktor multipliziert werden, um den Verlauf des Artefakts im Röntgenbild zu erhalten. Durch Addition des so ermittelten Verlaufs zu den Bildwerten der Röntgenaufnahme in der Umgebung der Defektstelle läßt sich der Artefakt daher praktisch beseitigen.

Grundsätzlich kann der Verlauf eines Artefakts, dessen Amplitude bekannt ist, berechnet werden. In der Regel ist nämlich die Größe der Defektstelle in der Photoleiterschicht kleiner als die Abmessungen eines Bildpunktes, der durch die Elektrometeranordnung gerade noch aufgelöst werden kann. Infolgedessen stellt der mittels der Elektrometeranordnung gemessene Verlauf der Ladungsdichte bzw. des Oberflächenpotentials in der Umgebung der Defektstelle nicht den tatsächlichen Verlauf der Ladungsdichte bzw. des Potentials an der Oberfläche des Photoleiters dar, sondern den sich durch das begrenzte Auflösungsvermögen der Elektrometeranordnung ergebenden Verlauf. Dieser entspricht der Punktabbildungsfunktion (point-spread-function), die sich aus den Parametern der Elektrometeranordnung berechnen läßt.

Zu den Parametern, die einen Einfluß auf die Punktabbildungsfunktion haben, gehört der Abstand der Elektrometeranordnung von der Oberfläche des Photoleiters. Wenn dieser nicht genau bekannt oder Änderungen unterworfen ist, ist eine exakte Berechnung des Artefaktverlaufs nicht möglich. Eine Weiterbildung der Erfindung sieht daher vor, daß der zu speichernde Verlauf des Artefakts in einem Dunkelentladungsbild gemessen wird.

Diese Weiterbildung eignet sich für Anordnungen, bei denen der Photoleiter auf dem Umfang eines drehbaren Zylinders angeordnet ist und bei denen zur Abtastung der Ladungsdichte auf der Oberfläche der Zylinder gedreht und die Elektrometeranordnung lediglich in Richtung der Zylinderachse verschoben wird. Wenn die Zylinderanordnung dabei eine geringe Unwucht hat, kann sich der Abstand periodisch - aber reproduzierbar - ändern, so daß eine Berechnung des Artefaktverlaufs nur schwer, eine Messung aber leicht möglich ist.

Die Erfindung wird nachstehend anhand der Zeichnung näher erläutert. Es zeigen:

Fig. 1 eine Röntgenaufnahmeanordnung, bei der die Erfindung angewandt werden kann,

Fig. 2a und b das bei einem Dunkelentladungsbild bzw. bei einer Röntgenaufnahme gemessene Oberflächenpotentialprofil entlang einer Geraden, auf der sich eine Defektstelle befindet,

Fig. 2c die daraus ableitbaren Parameter des Artefaktverlaufs und

Fig. 3 das Blockschaltbild einer Anordnung, bei der dieses Verfahren durchführbar ist.

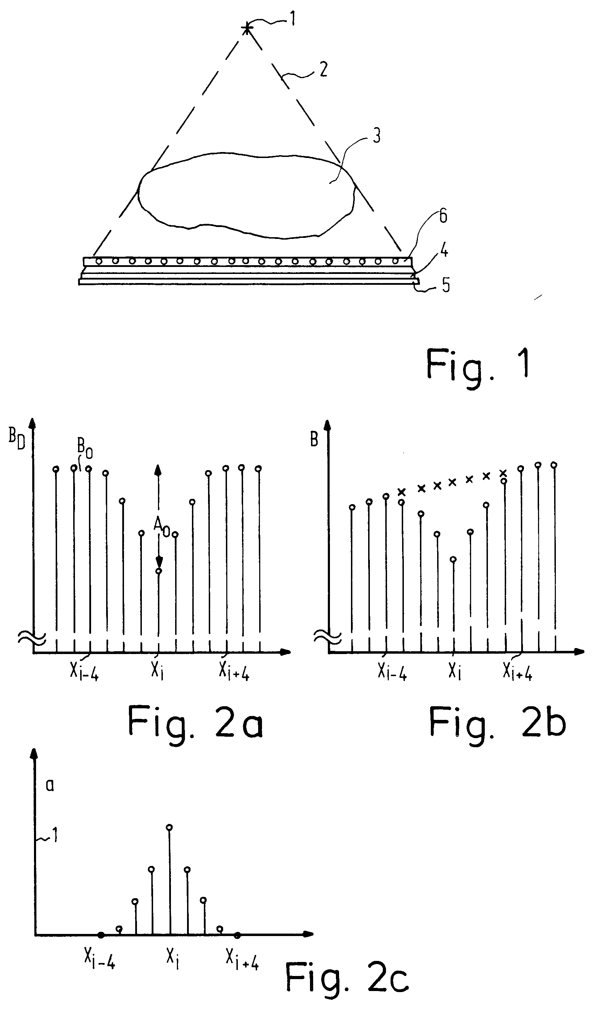

In Fig. 1 ist mit 1 schematisch eine Röntgenstrahlenquelle angedeutet, die ein fächerförmiges Strahlenbündel 2 emittiert, das ein Untersuchungsobjekt 3, beispielsweise den Körper eines Patienten, durchsetzt und auf einem dahinter befindlichen Photoleiter 4 ein von der Strahlenintensität abhängiges Ladungsmuster erzeugt. Der Photoleiter 4 besteht vorzugsweise aus einer 0,5 mm starken Selenschicht, die auf eine Aluminiumelektrode 5 aufgebracht ist.

Vor der eigentlichen Röntgenaufnahme wird der Photoleiter durch eine schematisch angedeutete Koronaentladungs-Vorrichtung 6 auf ein Potential von z.B. - 1750 V (gegenüber der Aluminiumelektrode 5) aufgeladen. Durch die nachfolgende Röntgenaufnahme - bei der die Koronaentladungs-Vorrichtung nicht mehr zwischen Strahlenquelle und Photoleiter liegen muß - wird die Photoleiteroberfläche mehr oder weniger entladen, je nach Intensität der Röntgenstrahlung. Das so erzeugte Ladungsmuster wird mittels einer nicht näher dargestellten Elektrometeranordnung abgetastet und digitalisiert, so daß sich Bildwerte ergeben, die dem Oberflächenpotential bzw. der Ladungsdichte in einem durch das Auflösungsvermögen der Elektrometeranordnung definierten Bildpunkt entsprechen. Die Defektstellen rufen in dem Bildpunkt, in dem sie sich befinden, ein Minimum des Oberflächenpotentials bzw. der Ladungsdichte hervor. Auch in den benachbarten Bildpunkten erscheint die Ladungsdichte verringert. Der durch den Artefakt beeinflußte Umgebungsbereich ist umso kleiner und die Artefaktamplitude ist umso größer, je größer das Auflösungsvermögen der Elektrometeranordnung ist.

Fig. 2a veranschaulicht einen solchen Artefakt in einem Dunkelentladungsbild; dabei sind für eine in X-Richtung verlaufende Gerade, auf der sich eine Defektstelle befindet, die Bildwerte $B_D$ (die die Ladungsdichte bzw. das Potential an der Oberfläche darstellen) als Funktion der Ortskoordinate x dargestellt. Man erkennt, daß der Bildwert an der Stelle $x_i$ ein Minimum hat und daß auch die Bildwerte in der Umgebung dieser Defektstelle kleiner sind, und zwar umso mehr, je dichter sie an der Defektstelle liegen. In einem gewissen Abstand von der Defektstelle $x_i$ macht sich der dadurch hervorgerufene Artefakt nicht mehr bemerkbar; im Beispiel sind dies die Bildpunkte an den Stellen $x_{i-4}$ und $x_{i+4}$. Hier sowie bei noch weiter entfernt liegenden Bildpunkten hat der Bildwert eine konstante Größe $B_o$. Die Amplitude $A_o$ des Artefakts im Dunkelentladungsbild entspricht der Differenz von $B_o$ und dem Bildwert des Dunkelentladungsbildes an der Stelle $x_i$.

Die anderen Defektstellen in dem Photoleiter rufen ähnliche Artefakte hervor, jedoch kann die Amplitude größer oder kleiner sein. Auch kann die Defektstelle in Bezug auf den Bildpunkt, in dem sie sich befindet, anders liegen, so daß sich ein von dem in Fig. 2a dargestellten symmetrischen Verlauf abweichender unsymmetrischer Verlauf ergibt.

Fig. 2b zeigt den Verlauf der Bildwerte B(x,y) in einer Röntgenaufnahme an der Defektstelle und in ihrer Umgebung. Der Artefakt erreicht auch hier an der Stelle $x_i$ seine größte Amplitude, die nach außen hin abnimmt. Die Amplitude kann aber von derjenigen im Dunkelentladungsbild abweichen. Sie hängt von der Intensität der Röntgenstrahlung während der betreffenden Aufnahme und gegebenenfalls von der Intensität der Röntgenstrahlung bei einer kurz davor angefertigten Röntgenaufnahme an der betreffenden Stelle ab.

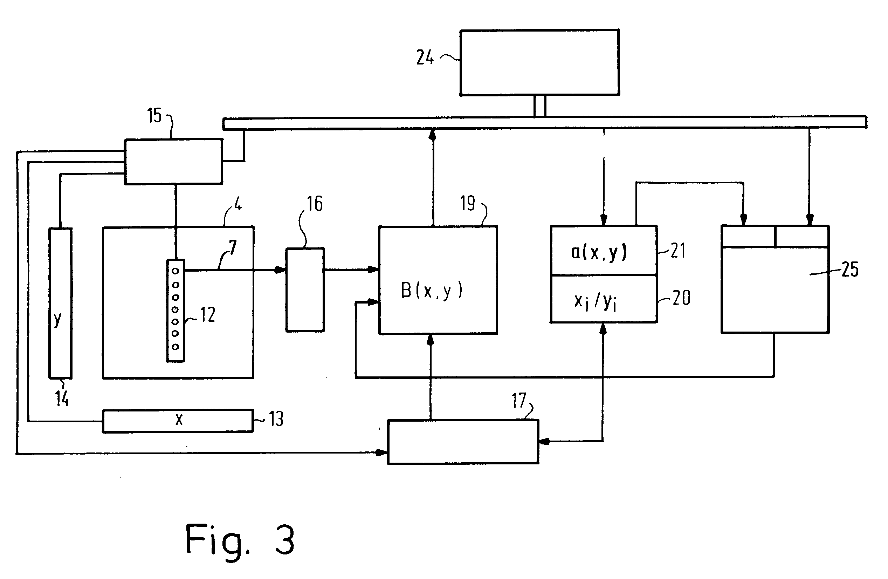

In Fig. 3 ist das Blockschaltbild einer Röntgenaufnahmeanordnung dargestellt, die die geschilderten Artefakte beseitigen kann. Die Oberfläche des Photoleiters 4 wird dabei mit einer Elektrometeranordnung 12 abgetastet, die eine Anzahl von Elektrometer- bzw. Influenzsonden enthält, von denen jede die Ladungsdichte bzw. das Oberflächenpotential in einem Bildpunkt erfaßt. Geeignete Elektrometeranordnungen sind u.a. in der DE-OS 29 48 660 und in der DE-OS 35 05 615 beschrieben. Damit das Oberflächenpotential sämtlicher Bildpunkte auf dem Aufzeichnungsträger erfaßt werden kann, muß die Elektrometeranordnung in zwei zueinander senkrechten (x,y-)Richtungen relativ zum Aufzeichnungsträger 4 verschoben werden. Diesem Zweck dient eine programmierbare Scansteuerung 15, die ihrerseits von einem geeigneten Prozeßrechner bzw. einem Host-Rechner 24 gesteuert wird. Die jeweilige Position der Elektrometeranordnung wird durch die x-y-Positionsgeber 14 bzw. 13 zur Scansteuerung 15 zurückgemeldet.

Die Elektrometeranordnung 12 kann für jede Elektrometersonde einen nachgeschalteten Verstärker und eine Abtast- und Halteschaltung enthalten, deren Ausgangssignale über einen nicht näher dargestellten, analog wirkenden Multiplexer und eine Leitung 7 dem Eingang eines Analog-Digital-Wandlers 16 zugeführt werden. Dieser setzt die als Analogsignale anliegenden Werte des Oberflächenpotentials bzw. der Ladungsdichte einer Oberfläche in den einzelnen Bildpunkten in digitale Datenworte mit einer Wortbreite von 16 Bit um. Die Strobe-Signale für den Analog-Digitalwandler 16 können von dem x-Positionsgeber 14 erzeugt werden (falls die Elektrometeranordnung den Photoleiter mäanderförmig mit in x-Richtung verlaufenden Zeilen abtastet). Die auf diese Weise erzeugten digitalen Datenworte werden einem Bildspeicher 19 zugeführt. Bei einer Bildpunktgröße von typischerweise 0,2mm x 0,2mm und einer Oberfläche des Photoleiters von 400mm x 400mm muß dieser Bildspeicher eine Kapazität von wenigstens 4 Millionen Datenworten mit je 16 Bit aufweisen. Ein Adressengenerator 17 speichert die vom Analog-Digital-Wandler gelieferten Datenworte unter einer Adresse ab, die aus den dem jeweiligen Bildpunkt zugeordneten, von der Scansteuerung 15 gelieferten Koordinaten x, y gebildet wird.

Der Host-Rechner 24 steuert die Anordnung in der folgenden Weise:

Zunächst wird ein Dunkelentladungsbild angefertigt, d.h. die Oberfläche des Photoleiters 4 wird gleichmäßig aufgeladen und das Oberflächenpotential wird mit Hilfe der Elektrometeranordnung 12 gemessen, ohne daß der Aufzeichnungsträger einer Röntgenstrahlung ausgesetzt wird. Die sich in diesem Dunkelentladungsbild für die einzelnen Bildpunkte ergebenden, dem Oberflächenpotential entsprechenden Bildwerte $B_D(x, y)$ werden in dem Speicher 20 gespeichert. Die Bildwerte werden nacheinander von dem Host-Rechner 24 gelesen, und das Dunkelentladungsbild wird nach Artefakten abgesucht. Dies erfolgt dadurch, daß der Rechner 24 nach einem geeigneten Algorithmus lokale Minima im Dunkelentladungsbild, die einen vorgebbaren Schwellwert unterschreiten, detektiert und die zugehörigen Bildpunktkoordinaten $x_i$, $y_i$ in einem Hilfsspeicher 20 gespeichert. Die gespeicherten Bildpunktkoordinaten geben die Lage einer Defektstelle an. Anschließend wird zu jeder auf diese Weise detektierten Defektstelle (ein Photoleiter kann bis zu 100 Defektstellen enthalten) eine vorzugsweise quadratische Umgebung definiert, die alle Bildpunkte enthält, deren Koordinaten den Bedingungen

$$x_{i-n} \leq x \leq x_{i+n} \quad (1)$$
$$y_{i-n} \leq y \leq y_{i+n} \quad (2)$$

genügen. Der Wert n ist dabei so gewählt, daß die Bildwerte an den durch die Ungleichungen (1) und (2) definierten Bildpunkten mehr oder weniger von der Defektstelle beeinflußt werden, während am (äußeren) Rand dieses Bereichs, d.h. bei den eine Bildpunktbreite oder mehr weiter außen liegenden Bildpunkten, die Defektstelle praktisch keinen Einfluß mehr haben soll. Bei dem in Fig. 2a dargestellten Beispiel wäre n = 4 ein geeigneter Wert, und es gibt (2n + 1)² Bildpunkte (mit Einschluß des die Defektstelle kennzeichnenden Bildpunktes) die den Bedingungen 1 und 2 genügen.

Die Bildwerte an den durch Gleichung (1) und (2) definierten Bildpunkten werden im Rechner 24 zu normierten Artefaktwerten a (x,y) nach der Beziehung

$$a(x,y) = (B_o - B_D(x,y)) / A_o \quad (3)$$

umgerechnet. Die normierten Artefaktwerte haben in ihrem Zentrum den Wert 1 und an ihrem Rand einen Wert von nahezu Null. Diese Werte deren Verlauf an der Defektstelle $x_i$ und in ihrer Umgebung in Fig. 2c dargestellt ist, werden in dem Hilfsspeicher 21 abgelegt. Dies wird für sämtliche Defektstellen wiederholt. Nach dieser Vorbereitung läuft nach jeder Röntgenaufnahme das folgende Verfahren zur Artefaktverringerung ab:

Der Photoleiter wird abgetastet, und die Bildwerte B(x,y) werden im Bildspeicher 3 gespeichert. Mit Hilfe der im Hilfsspeicher 20 gespeicherten Liste von Koordinaten werden die Bildwerte an der Defektstelle und am Rand des durch die Ungleichung 1 und 2 definierten Bereiches herangezogen und dort die Artefaktamplitude $A(x_i,y_i)$ in der Röntgenaufnahme nach der Beziehung

$$A(x_i,y_i) = B(x_i,y_i) - 0{,}5 (B(x_{i-n},y_i) + B(x_{i+n},y_i)) \quad (4)$$

berechnet. Hierbei wird also die Artefaktamplitude aus der Differenz des Bildwertes $B(x_i,y_i)$ an der Defektstelle und dem arithmetischen Mittelwert von zwei Bildpunkten berechnet, die am Rande des Umgebungsbereichs sowie auf der Geraden $y = y_i$ liegen. Es ist aber auch möglich, den Mittelwert aus mehr als zwei Bildpunkten am Rande des Umgebungsbereichs zu berechnen.

Auf diese Weise wird die jeweilige Artefaktamplitude für sämtliche Defektstellen berechnet, deren Koordinaten im Speicher 21 gespeichert sind.

Nach dieser Berechnung der nur für die jeweilige Röntgenaufnahme geltenden Artefaktamplituden wird vom Adressengenerator 17 der in dem Speicher 21 gespeicherte Verlauf $a(x_i,y_i)$ jedes Artefakts in dem Umgebungsbereich der Defektstelle aufgerufen. Jeder Bildwert $B(x,y)$ in einem solchen Umgebungsbereich wird dadurch korrigiert, daß der gespeicherte Verlauf $a(x, y)$ mit der nach Gleichung 4 berechneten Artefaktamplitude multipliziert wird und das Produkt zu dem betreffenden Bildwert addiert wird nach der Formel

$$B'(x,y) = B(x,y) + a(x,y) . A(x_i,y_i) \quad (5)$$

Der korrigierte Bildwert $B'(x,y)$ ersetzt den unkorrigierten Bildwert $B(x,y)$ in dem Bildspeicher 19.Der sich daraus ergebende Verlauf der Bildwerte in der Umgebung von $x_i$ ist in Fig. 2b durch Kreuze angedeutet.

Diese einfache Rechnung kann, wie in Figur 3 angedeutet, mit Hilfe eines Rechenwerkes 25 durchgeführt werden. Alternativ kann diese Rechnung aber auch vom Hostrechner 1 erledigt werden, denn die Anzahl der nötigen Operationen ist in der Größenordnung von 100.000 pro Bild und stellt damit keine besonderen Anforderungen an die Rechengeschwindigkeit, wenn man davon ausgeht, daß die Korrekturrechnung innerhalb einer Sekunde durchgeführt wird.

Die Größe der Umgebungsbereiche, der Wert n in den Gleichungen 1 und 2 kann für alle Defektstellen gleich groß gewählt werden. Es ist jedoch auch möglich, die Größe des Umgebungsbereichs in Abhängigkeit von der Amplitude $A_o$ des Artefakts im Dunkelentladungsbild zu wählen, so daß der Umgebungsbereich umso größer ist, je größer die Amplitude $A_o$ ist.

Vorstehend wurde die Erfindung in Verbindung mit einem ebenen Fotoleiter 4 beschrieben. Sie ist jedoch auch bei einer Anordnung mit einem auf einen rotierenden Zylindermantel aufgebrachten Fotoleiter anwendbar. Eine solche Anordnung ist aus der DE-OS 35 34 768 bekannt. Vorzugsweise wird dabei der Artefaktverlauf $a(x,y)$ (Fig. 2c) ebenfalls anhand des Dunkelentladungsbildes gemessen. Bei einer kleinen Unwucht des den Fotoleiter tragenden Zylinders ändert sich nämlich der Abstand zwischen Fotoleiter und Elektrometeranordnung und damit der Verlauf des Artefakts periodisch aber reproduzierbar, so daß eine Berechnung des Artefaktverlaufs nur schwer möglich ist.

**Patentansprüche**

1. Verfahren zum Erzeugen einer Röntgenaufnahme mittels eines Röntgenstrahlung in ein Ladungsmuster umsetzenden Photoleiters, der vor der Röntgenaufnahme gleichmäßig aufgeladen und während der Röntgenaufnahme in Abhängigkeit von der Intensität der Röntgenstrahlung entladen wird und dessen Oberfläche zur Erfassung der Ladungsdichte abgetastet wird, wobei für jeden Bildpunkt ein von der Entladung an dem betreffenden Bildpunkt abhängiger Bildwert gebildet wird und wobei die Lage $(x_i,y_i)$ von Artefakte in Form von lokalen Ladungsdefiziten auf dem Photoleiter bewirkenden Defektstellen gemessen und gespeichert wird, dadurch gekennzeichnet, daß zusätzlich der räumliche Verlauf $(a(x,y))$ der Artefakte in der Umgebung der Defektstellen gespeichert wird, daß bei nachfolgenden Röntgenaufnahmen aus den Bildwerten am Ort der Defektstelle $(B(x_i,y_i))$ und am Rand des Umgebungsbereichs $(B(x_{i+n},y_i); B(x_{i-n},y_i))$ um die Defektstelle die Amplitude $(A(x_i,y_i))$ des durch die Defektstelle verursachten Artefakts durch Differenzbildung bestimmt wird, daß dem Produkt der Amplitude $(A(x_i,y_i))$ und des gespeicherten Verlaufs $(a(x,y))$ entsprechende, den Verlauf des Artefakts in der Röntgenaufnahme in dem Umgebungsbereich darstellende Korrekturwerte gebildet werden und daß diese zu den Bildwerten $(B(x,y))$ in diesem Bereich zwecks Erzeugung korrigierter Bildwerte $((B'(x,y))$ addiert werden.

2. Verfahren nach Anspruch 1, dadurch gekennzeichnet, daß der zu speichernde Verlauf des Artefakts $(a(x,y))$ in einem Dunkelentladungsbild gemessen wird.

3. Anordnung zur Durchführung des Verfahrens nach Anspruch 1, mit einer Röntgenstrahlenquelle (1), einem mittels der Röntgenstrahlenquelle belichtbaren Photoleiter (4), einer Aufladeeinrichtung (6) zur Aufladung des Photoleiters, einer Elektrometeranordnung (12) zur Erfassung der Ladungsdichte an der Oberfläche des Photoleiters und zur Erzeugung davon abhängiger Bildwerte, sowie mit einem ersten Speicher (19) zur Speicherung der Bildwerte einer Röntgenaufnahme, dadurch gekennzeichnet, daß ein weiterer Speicher (20,21) zum Speichern der Lage der Defektstellen und des Verlaufs des dadurch in einem Umgebungsbereich hervorgerufenen Artefakts vorgesehen ist, daß mittels einer Recheneinheit (6) bei nachfolgenden Röntgenaufnahmen aus den Bildwerten am Ort der Defektstelle $(B(x_i,y_i))$ und am Rand des Umgebungsbereichs $(B(x_{i+n},y_i); B(x_{i-n},y_i))$ um die Defektstelle die Amplitude $(A(x_i,y_i))$ des durch die Defektstelle verursachten Artefakts durch Differenzbildung bestimmt wird, daß dem Produkt der Amplitude $(A(x_i,y_i))$ und des gespeicherten Verlaufs $(a(x,y))$ entsprechende, den Verlauf des Artefakts in der Röntgenaufnahme in dem Umgebungsbereich darstellende Korrekturwerte gebildet werden und daß diese zu den Bildwerten $(B(x,y))$ in diesem Bereich zwecks Erzeugung korrigierter Bildwerte ((B'(x,y)) addiert werden.

## Claims

1. A method of producing an X-ray image by means of a photoconductor which converts X-rays into a charge pattern and which is uniformly charged prior to the X-ray exposure and is discharged as a function of the intensity of the X-rays during the X-ray exposure, its surface being scanned in order to determine the charge density, for each pixel there being formed an image value which depends on the discharge in the relevant pixel, the position $(x_i, y_i)$ of fault locations causing artefacts in the form of local charge deficits on the photoconductor being measured and stored, characterized in that additionally the variation in space $(a(x, y))$ of the artefacts in the vicinity of the fault locations is stored, in that during subsequent X-ray exposures the amplitude $(A(x_i, y_i))$ of the artefact caused by the fault location is determined by differentiation from the image values at the position of the defect location $(B(x_i, y_i))$ and at the edge of the zone $(B(x_{i+n}, y_i); B(x_{i-n}, y_i))$ surrounding the fault location, in that correction values are formed which correspond to the product of the amplitude $(A(x_i, y_i))$ and the stored variation $(a(x,y))$ and which represent the variation of the artefact in the X-ray image in the surrounding zone, and in that these correction values are added to the image values (BBx, y)) in this zone in order to form corrected image values $(B'(x, y))$.

2. A method as claimed in Claim 1, characterized in that the artefact variation $(a(x, y))$ to be stored is measured in a dark discharge image.

3. A device for performing the method claimed in Claim 1, comprising an X-ray source (1), a photoconductor (4) which can be exposed by means of the X-ray source, a charging device (6) for charging the photoconductor, an electrometer device (12) for measuring the charge density on the surface of the photoconductor and for generating image values which are dependent thereon, and also comprising a first memory (19) for storing the image values of an X-ray image, characterized in that there is provided a further memory (20, 21) for storing the position of the fault locations and the variation of the artefact caused thereby in a surrounding zone, in that during subsequent X-ray exposures the amplitude $(A(x_i, y_i))$ of the artefact caused by the fault location is determined by means of an arithmetic unit (6) by differentiation from the image values at the position of the fault location $(B(x_i, Y_i))$ and at the edge of

the zone $(B(x_{i+n}, y_i); B(x_{i-n}, y_i))$ surrounding the fault location, in that correction values are formed which correspond to the product of the amplitude $(A(x_i, y_i))$ and the stored variation $(a(x, y))$ and which represent the variation of the artefact in the X-ray image in the surrounding zone, and in that these correction values are added to the image values $(B(x, y))$ in this zone in order to form corrected image values $(B'(x, y))$.

## Revendications

1. Procédé de production d'une image radiographique à l'aide d'un rayonnement X dans un photoconducteur convertissant un motif de charges, qui est chargé uniformément avant l'enregistrement radiographique et est déchargé pendant l'enregistrement radiographique en fonction de l'intensité des rayons X et dont la surface est balayée pour détecter la densité de charge, étant entendu que, pour chaque point d'image, est formée une valeur d'image dépendant de la décharge au point d'image en question et que la position $(x_i, y_i)$ d'endroits de défauts provoquant des artefacts ayant la forme de déficits de charges locaux sur le photoconducteur est mesurée et stockée en mémoire, caractérisé en ce qu'en outre, est stockée l'évolution spatiale $[a(x,y)]$ des artefacts dans l'environnement des endroits de défauts que lors des enregistrements radiographiques suivants est déterminée à partir des valeurs d'image situées à l'endroit de défaut $[B(x_i,y_i)]$ et au bord du domaine environnant $[B(x_{1+n},y_i); B(x_{i-n},y_i)]$ entourant l'endroit de défaut, l'amplitude $[A(x_i,y_i)]$ de l'artefact provoqué par l'endroit de défaut par formation de différences, que sont formées les valeurs de corrections correspondant au produit de l'amplitude $[A(x_i,y_i)]$ et de l'évolution $[a(x,y)]$ stockée représentant l'évolution de l'artefact dans l'enregistrement radiographique dans le domaine environnant et.que ces valeurs de correction sont additionnées aux valeurs d'image $[B(x,y)]$ dans ce domaine en vue de la production de valeurs d'image $[b'(x,y)]$ corrigées.

2. Procédé suivant la revendication 1, caractérisé en ce que l'évolution de l'artefact $[a(x,y)]$ à stocker en mémoire est mesurée dans une image de decharge sombre.

3. Dispositif pour l'exécution du procédé suivant la revendication 1. comportant une source de rayons X (1), un photoconducteur (4) pouvant être exposé au rayonnement de la source de rayons X, un dispositif de charge (6) pour la charge du photoconducteur, un montage d'électromètres (12) pour détecter la densité de charge à la surface du photoconducteur et pour produire des valeurs d'image qui en dépendent ainsi qu'une première mémoire (19) pour le stockage des valeurs d'image d'un enregistrement radiographique, caractérisé en ce qu'il est prévu une autre mémoire (20, 21) pour le stockage de la position des endroits de défauts et de l'évolution de l'artefact provoqué par ceux-ci dans un domaine environnant, qu'au moyen d'une unité de calcul (6) est déterminée, lors d'enregistrements radiographiques suivants à partir des valeurs d'image à l'endroit de défaut $[B(x_i,y_i)]$ et au bord du domaine environnant $[B(x_{i+n},y_i); B(x_{i-n},y_i)]$ entourant cet endroit de défaut, l'amplitude $[A(x_i,y_i)]$ de l'artefact provoqué par l'endroit de défaut, que sont formées des valeurs de correction correspondant au produit de l'amplitude $[A(x_i,y_i)]$ et de l'évolution $[a(x,y)]$ stockée, représentant l'évolution de l'artefact dans l'enregistrement radiographique dans le domaine environnant et que ces valeurs de correction sont additionnées aux valeurs d'image $[B(x,y)]$ dans ce domaine en vue de l'obtention de valeurs d'image $[B'(x,y)]$ corrigées.

Fig. 1

Fig. 2a

Fig. 2b

Fig. 2c

Fig. 3

EP 0 342 760 B1